# EUROPÄISCHE PATENTANMELDUNG

(11) **EP 1 004 489 A2**
(43) Veröffentlichungstag der Anmeldung: **31.05.2000**
(21) Anmeldenummer: 99123360.2
(22) Anmeldetag: 23.11.1999
(51) Int. Cl.: B60S 1/38

(54) **Manuelle Nachschleifvorrichtung für Scheibenwischerblätter**

(30) Priorität: 23.11.1998 DE 19853877
(71) Anmelder: Ronnenberg, Dieter, 89555 Steinheim (DE)
(72) Erfinder: Ronnenberg, Dieter, 89555 Steinheim (DE)

(57) **Zusammenfassung**

Die Erfindung betrifft eine Vorrichtung (1) zum manuellen Nachschleifen von Scheibenwischerblättern (2). Die Vorrichtung (1) kommt dabei vollständig ohne eine Hilfsenergie aus und das Nachschleifen ist ohne Demontage der Scheibenwischerblätter (2) vom Scheibenwischerarm durchführbar. Zueinander beabstandete, an Leisten angeformte, Stützflächen (3,4) werden beidseitig an die Scheibenwischerlippe (20,21) angelegt. Die Scheibenwischerlippe (5) ragt dann nur wenige Millimeter über die Oberfläche der Leisten hinaus. Ein auf den Leisten (9,10) - mit mindestens einer Schleiffläche und mit einem Schleifmedium (8) versehenen - oszillierend bewegbarer Schlitten trägt das Scheibenwischerlippen-Material (5) ab, so daß Riefen entfernt und Lippenkanten (5) wieder scharfkantig werden können.

## Beschreibung

Die Erfindung betrifft eine Vorrichtung zum manuellen Nachschleifen von Scheibenwischerblättern.

Es ist ein bekanntes Problem, daß neue und damit riefenfreie Scheibenwischerblätter schon nach kurzem Einsatz schadhaft werden. So stellen beispielsweise an eine Windschutzscheibe angetrocknete Insekten beim Gebrauch des Scheibenwischers ein hartes und scharfkantiges Hindernis dar. An der Scheibenwischerlippe entstehen dabei - quer zu ihrer Längsausdehnung - Riefen, die zu einem unvollständigen Wischergebnis auf der Windschutzscheibe führen. Andere Ursachen für die oben erwähnten Riefen sind weiterhin Eis bzw. Eisreste und Staub- bzw. Sandkörner. Da der Abstand zwischen den Betriebszyklen eines Scheibenwischers oftmals weniger als einen Tag beträgt, kann man sagen, daß schon kurz nach dem Einbau fabrikneuer Scheibenwischerblätter, diese schadhaft werden. Aber auch ohne Riefen in der Scheibenwischerlippe kann die Wischqualität schon schnell, relativ zur möglichen Gesamtbetriebsdauer des Scheibenwischers, abnehmen, weil die Kanten der Scheibenwischerlippe durch Abnutzung geringfügig abgerundet werden.

Aus dem Stand der Technik sind verschiedene Nachschleifeinrichtungen bekannt. So beschreibt beispielsweise das deutsche Gebrauchsmuster G 94 10 489.1 eine auf einem Standfuß angeordneten Nachschleifvorrichtung. Beidseitig und über die gesamte Länge der Scheibenwischerlippe angeordnete Spannleisten fixieren die Form der Lippe. Eine längs der Scheibenwischerlippe, mittels eines Zylinders, sich bewegende Abtrenneinrichtung - beispielsweise in Form eines beweglichen Schleifkörpers - trennt einen gewünschten Betrag der Höhe der Gummilippe auf ganzer Scheibenwischerlänge ab. Bei dieser Vorrichtung gibt es den Nachteil, daß zunächst erst mal der Scheibenwischer oder nur das Gummimaterial aus der Halterung des Scheibenwischerarmes ausgebaut werden muß. Außerdem ist nachteilig, daß beim Nachschleifen Gummimaterial über die gesamte Länge des Scheibenwischers abgetrennt wird. Ferner ist nachteilig, daß diese Einrichtung konstruktiv sehr aufwendig und damit sehr teuer ist.

Ein anderer Stand der Technik ist aus dem deutschen Gebrauchsmuster G 82 36 906.2 bekannt. Die dort gezeigte Vorrichtung besteht aus einem handtellergroßen Gehäuse, in das ein Schleifmittel eingesetzt ist. Dieses Schleifmittel weist eine durchgehende Rille auf, die im wesentlichen die Querschnittsform einer Scheibenwischerlippe wiedergibt. Die Seitenwände des Schleifmittels stützen bei dem Schleifvorgang die Lippe, so daß diese nicht umkippen kann. Damit die Scheibenwischerlippe wieder scharfkantig geformt werden kann, ist zwischen den Seitenwänden des Schleifkörpers, eine weitere, hier sehr schmale, Schleiffläche angeordnet. Diese Vorrichtung wird entweder über die Scheibenwischerlippe gezogen oder der Scheibenwischer wird durch dieses Schleifmittel hindurch gezogen. Ein Ausbau des Scheibenwischers aus dem Scheibenwischerarm ist hierbei nicht zwingend erforderlich. Der Nachteil dieser Vorrichtung besteht darin, daß das Schleifmittel jeweils zwischen seinen Seitenwänden der schmalen Schleiffläche scharfkantig ausgebildet sein muß, um eine exakte Scheibenwischer-Lippenkante erzeugen zu können, was nach einigem Gebrauch des Schleifmittels durch Abnutzung nicht mehr gegeben ist. Ein Nachschleifen des Schleifmittels wäre dann erforderlich. Dieses ist aber nicht offenbart. Ein weiterer Nachteil der Vorrichtung ist, daß der Schleifvorgang an den gesamten Seitenflächen der Scheibenwischerlippe unnötig ist. Weiterhin ist nachteilig, daß ein Gleitvorgang der Scheibenwischerlippe relativ zu den Seitenwänden des Schleifmittels erfolgt, welches eine sichere Führung der flexiblen Scheibenwischerlippe sehr erschwert. Aus den Figuren dieses Gebrauchsmusters werden in etwa die körperlichen Maße dieser Vorrichtung deutlich. Daraus läßt sich ablesen, daß die Länge der Schleiffläche kürzer ist als der Abstand zwischen zwei Stützstellen einer Scheibenwischer-Kleinwippe. Mit Kleinwippe soll hier diejenige Wippe bezeichnet werden, die unmittelbar dem Gummikörper der Scheibenwischerlippe zugewandt ist. Wegen der geringen Ausdehnung dieses Schleifmittels in Längsrichtung der Scheibenwischerlippe, kommt es durch das Andrücken des Schleifmittels beim Schleifvorgang zu einer Durchbiegung des Scheibenwischergummis. Damit liegt dieser nicht mehr in ausreichender Qualität parallel auf dem Schleifmittel auf und es kommt somit zu einem fehlerhaften Nachschleifen der Scheibenwischerlippe.

Es ist deshalb Aufgabe der Erfindung eine Nachschleifvorrichtung zu finden, die die beschriebenen Nachteile des Standes der Technik nicht mehr aufweist.

Die Erfindung wird durch die Merkmale des Anspruches 1 gelöst.

Der Erfinder hat bei der Analyse des Standes der Technik die Nachteile erkannt. Er kam zu der Erkenntnis, daß eine Aufteilung der Vorrichtung, in ein führenden/stützenden Teil und in ein schleifendes Teil, erforderlich ist. Weiterhin erkannte er, daß auch eine gute Führung/Stützung erzielt werden kann, wenn kein umfangreiches Standgerät verwendet wird. Bei der erfindungsgemäßen Vorrichtung befindet sich je eine Leiste beiderseits der Scheibenwischerlippe. Diese Leisten haben bezüglich ihrer Berührungsrichtung an die Scheibenwischerlippe, ein hohes Biege-Widerstandsmoment. Durch das Hineintreten der keilförmigen Scheibenwischerlippe in den Spalt zwischen beiden Leisten bleibt dieser Spalt deshalb dennoch parallel. Diese Leisten haben eine Anlagefläche oder -linie an den Seiten der Scheibenwischerlippe. Vorzugsweise ist diese Anlagefläche/Linie derart ausgebildet, daß diese im wesentlichen parallel zu den keilförmigen Seitenflächen der Scheibenwischerlippe sind.

Die Leisten werden so über Brücken miteinander verbunden, daß die Leisten zusammen mit den Brücken einen Rahmen bilden, der zwischen den Leisten einen im wesentlichen parallelen Spalt für die Aufnahme der Scheibenwischerlippe bildet. Wenn der Scheibenwischerarm von der Windschutzscheibe - beispielsweise eines Kraftfahrzeuges - abgeschwenkt wird, so kann man den Scheibenwischer ungefähr noch weitere 90 Grad um den Drehpunkt seiner Anbindung an den Scheibenwischerarm schwenken. In dieser Stellung ist jede Scheibenwischerlippe für einen Menschen leicht zugänglich, welches ein großer Vorteil für die Handhabung der erfindungsgemäßen Vorrichtung ist, da hierdurch kein Ausbauen des Scheibenwischers zum Zwecke des Nachschleifens erforderlich ist.

Auf einen derart abgeschwenkten Scheibenwischer wird nun der aus den Leisten und den Brücken bestehende Teil der Nachschleifvorrichtung aufgelegt.

Durch den parallelen Spalt zwischen den Leisten ragt die keilförmige Scheibenwischerlippe an allen Stellen des Spaltes etwa gleichmäßig heraus. Mit einer Hand kann sowohl der Scheibenwischer, als auch dieser Teil der Vorrichtung gehalten werden. In der anderen Hand befindet sich dann eine Halteeinrichtung mit dem Schleifmedium. Diese Halteeinrichtung wird längs der Leisten oszillierend über die aus dem Spalt zwischen den Leisten nur 1 bis 2 mm herausragende Scheibenwischerlippe bewegt. Bei einer Breite der Scheibenwischerlippe von nur etwa 0,8 mm ist eine ausreichende Steifigkeit der Lippe gegen Umknicken gegeben, zumal die Schleifkraft in Längsrichtung der Scheibenwischerlippe gerichtet ist und nicht quer dazu.

Die Halteeinrichtung liegt beim Schleifen auf Breitseiten der Leisten auf. Beim Schleifen gleiten die Unterseiten der Halteeinrichtung schlittenförmig auf den Leisten. Mindestens ein federndes Element der Halteeinrichtung drückt das Schleifmedium beispielsweise auf die Schmalfläche der Scheibenwischerlippe. Die Federkonstante des federnden Elementes ist derart abgestimmt, daß selbst bei unterschiedlichen Höhen der Scheibenwischerlippe - gemessen oberhalb der Leisten - eine nahezu gleiche Anpreßkraft zustande kommt. Das federnde Element ist in einem großen Radius ausgeführt, so daß die zu schleifende Stelle der Scheibenwischerlippe durch die Schleifbewegung einem sich behutsam aufbauenden Schleifdruck ausgesetzt ist. Durch die Radiusform des federnden Elementes ist dieser Vorteil auch bei umgekehrter Schleifbewegung gegeben.

Wie schon ausgeführt, sind die schädlichen Riefen in der Scheibenwischerlippe quer orientiert. Die Riefentiefe beträgt in der Regel weniger als 0,1 mm. Weil die Riefen häufig nicht über die gesamte Länge der Scheibenwischerlippe verteilt sind, ist auch nur ein Nachschleifen in dem Lippenbereich erforderlich, wo die Riefen vorhanden sind. Durch die Radiusform des federnden Elementes entsteht ein allmählicher Übergang zwischen dem nachgeschliffenen und dem nicht-geschliffenen Bereich der Scheibenwischerlippe. Da der Abtrag des Gummimaterials nur in sehr kleinen Beträgen erfolgt, ist bei einem nur punktuellen Nachschleifen, die Oberfläche der Schmalfläche der Scheibenwischerlippe nur geringfügig wellenförmig. Diese Wellenform wird durch die Anpreßmechanik des Scheibenwischers vollständig ausgeglichen, so daß die Anpreßkraft der Scheibenwischerlippe auf die Windschutzscheibe so ausfällt, als ob der Scheibenwischer fabrikneu wäre.

Die Halteeinrichtung kann wie eine Fingernagelbürste an seinen Seitenwänden gehalten werden. Zur Beeinflussung der Anpreßkraft beim Nachschleifen, kann aber auch noch ein Finger auf das der Schmalfläche der Scheibenwischerlippe zugewandte federnde Element der Halteeinrichtung gesetzt werden.

Bei einer anderen Ausführungsform der Halteeinrichtung werden auch zwei Schleifflächen an die Seitenflächen der Scheibenwischerlippe angelegt. Diese Schleifflächen werden entweder verstärkt durch Fingerkraft oder überhaupt erst durch mittels Fingerkraft an die Scheibenwischerlippen-Seitenflächen angepreßt.

Beim Nachschleifen der Scheibenwischerlippe entstehen zwei mikrofeine, scharfe Längskanten. Ein möglicherweise entstehender Grat kann entweder leicht mit Fingernägeln entfernt werden oder wird nach dem Nachschleifen bei den ersten Wischbewegungen des Scheibenwischers abgerieben. Vor dem ersten Einsatz des Scheibenwischers nach dem Nachschleifen sollte selbstverständlicherweise die Windschutzscheibe gereinigt werden, damit die Verursacher der Riefen, wie angetrocknete Insekten, Sandkörner oder Eis bzw. Eisreste, entfernt sind.

Zur Kontrolle des Nachschleifergebnisses gibt es mehrere Möglichkeiten. Zum einen kann man mit dem bloßen Auge sehr gut noch Reste der Riefen in dem quer dazu verlaufenden Schleifbild erkennen. Eine Riefentiefe von weniger als 1/100 mm ist so noch zu erkennen. Eine andere Kontrollmöglichkeit ist das Erfühlen mit einer vorzugsweise feuchten Zeigefingerkuppe, der in Längsrichtung der Scheibenwischerlippe bewegt wird. Der menschliche Tastsinn ist derart feinfühlig, daß er ebenfalls Unebenheiten von weniger als 1/100 mm erspüren kann. Eine weitere Kontrollmöglichkeit besteht in der Beobachtung des Wischergebnisses auf der nassen Windschutzscheibe. Wenn Wasserspuren in der Form der Wischbewegung des Scheibenwischers auf der Windschutzscheibe zurückbleiben, so sind entweder noch Riefen in der Scheibenwischerlippe vorhanden oder die Wischkante ist noch nicht ausreichend scharfkantig.

Wie oben bereits erwähnt, bilden die Leisten zusammen mit den Brücken einen Rahmen. Zwischen den Brücken befindet sich die freie Länge der Nachschleifvorrichtung mit dem Spalt zwischen den Leisten zur Aufnahme der keilförmigen Scheibenwischerlippe. In einer Ausführungsform der erfindungsgemäßen Nachschleifvorrichtung entspricht die freie Länge gleich der Länge der Scheibenwischerlippe. Da Scheibenwischerlippen zum Teil bis zu 50 cm lang sein können, ergäbe sich nach dem Empfinden mancher Menschen eine etwas sperrige Vorrichtung. Der Erfinder erkannte, daß seine Vorrichtung auch dann noch zuverlässig funktioniert, wenn die freie Länge der Nachschleifvorrichtung etwa dem dreifachen Abstand der kleinsten Kleinwippen bzw. von 300 mm entspricht. Der Rahmen wird dann lediglich nur auf den Bereich der Scheibenwischerlippe aufgesetzt, der die Riefen und/oder abgerundeten Wischkanten aufweist. Ist in einem weiteren Bereich der Scheibenwischerlippe Nachschleifarbeit erforderlich, so wird einfach der Rahmen dorthin verschoben oder versetzt und das Nachschleifen ausgeführt.

Ein besonderer Vorteil der Erfindung ist, daß das Schleifmedium aus handelsüblichen Sandpapier bestehen kann, welches jederzeit und überall nachgekauft werden kann. Die Größe des erforderlichen Sandpapierstreifens kann sich jedermann/jedefrau selbst zurechtschneiden. Die Körnung des Sandpapieres sollte dabei 120 oder feiner sein. Feineres Schleifmedium führt selbstverständlich zu weniger Grat an den Scheibenwischerlippen, es erhöht aber auch die Schleifdauer.

Ein weiterer Vorteil der erfindungsgemäßen Vorrichtung besteht darin, daß - mit Ausnahme des Schleifmediums - alle Teile in einfachster Weise aus Kunststoff hergestellt werden können. Dabei können die für eine Nachschleifvorrichtung erforderlichen zwei Leisten und die zwei Brücken, jeweils mit nur einem Spritzwerkzeug gefertigt werden. Auch die Halteeinrichtung für das Schleifmedium kann in einem Spritzwerkzeug einschließlich der integrierten Blattfeder gefertigt werden. Die Leisten und Brükken sind steck- und rastbar, so daß der Anwender seine Nachschleifvorrichtung selbst zusammenbauen kann.

Bei einer weiteren Ausgestaltung der Erfindung werden die Leisten aus gezogenen Aluminiumschienen hergestellt. Dieses kann je nach den aktuellen Preisen für die Rohstoffe, gegenüber den Leisten aus Kunststoff, kostengünstiger sein.

Beim Schleifen der Scheibenwischerlippe entsteht der Schleifstaub, welcher sich teilweise zwischen den Körnern des Schleifmediums festsetzt. Besonders vorteilhaft ist es deshalb, wenn die schleifende Oberfläche des Schleifmediums mit einem en Staub abweisenden Mittel ausgerüstet wird. Diese Mittel können beispielsweise Talkum, Silikon- oder Teflon sein. Auch kann die Oberfläche mit einem Lack versehen sein, der zwar auch das Schleifmedium benetzt, aber vor allen Dingen den engsten Raum zwischen den Körnern ausfüllt. Beim Schleifen würde dann das Schleifmedium an den beanspruchten Stellen die Lackschicht abstoßen.

Durch die Art und Weise der Konstruktion der erfindungsgemäßen Nachschleifvorrichtung, ist diese deshalb auch extrem kostengünstig gegenüber der Einrichtung aus dem deutschen Gebrauchsmuster G 94 10 489.1 und ist außerdem funktional besser gegenüber dem Schleifstein aus dem deutschen Gebrauchsmuster G 82 36 906.2.

Weitere Ausgestaltungen der Erfindung ergeben sich aus der Figurenbeschreibung und den Unteransprüchen.

Die Erfindung soll nun anhand der Figuren näher erläutert werden. Es zeigen:
- Figur 1:: Ansicht von der Handhabung der erfindungsgemäßen Nachschleifvorrichtung am Beispiel einer Pkw-Scheibenwischerlippe,
- Figur 2:: Anordnung der Nachschleifvorrichtung an einem Scheibenwischer,
- Figur 3:: Querschnitts-Ausschnitt durch Scheibenwischer und Nachschleifvorrichtung,
- Figur 4a, 4b:: Ansichten eines Rahmens der Nachschleifvorrichtung,
- Figur 5a - 5e:: eine Ausführungsform einer Halteeinrichtung der Nachschleifvorrichtung in verschiedenen Ansichten,
- Figur 6a - 6e:: eine weitere Ausführungsform einer Halteeinrichtung der Nachschleifvorrichtung in verschiedenen Ansichten,
- Figur 7a - 7b:: eine weitere Ausführungsform eines Rahmens der Nachschleifvorrichtung.

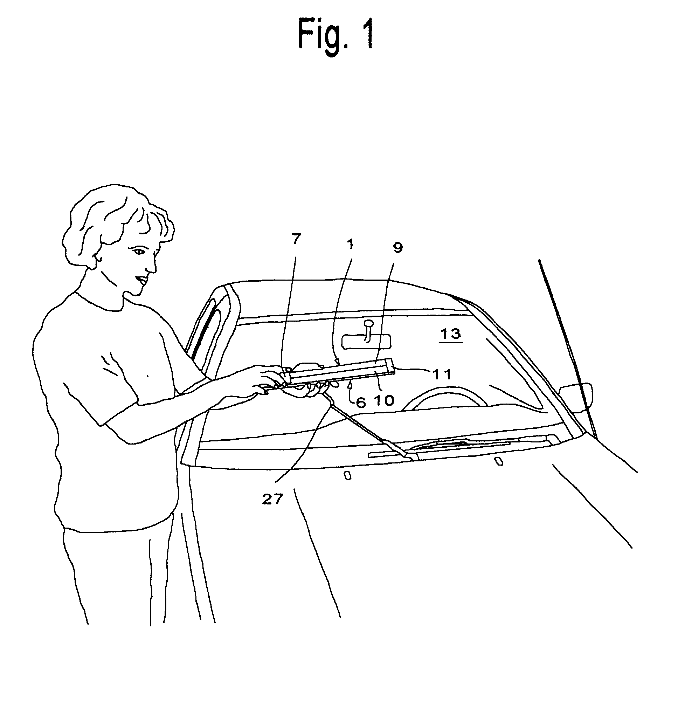

In der Figur 1 wird anschaulich die Handhabung der Nachschleifvorrichtung 1 gezeigt. Der Scheibenwischerarm 27 wurde von der Windschutzscheibe 13 so weit abgeschwenkt, daß der (hier verdeckte) Scheibenwischer 6 um seinen Drehpunkt mit dem Scheibenwischerarm 27, um etwa 90 Grad gedreht werden kann. Der aus den Leisten 9, 10 und den Brückenelementen 11, 12 (12 ist hier verdeckt) bestehende Rahmen ist auf die Scheibenwischerlippe 5 aufgelegt. Die linke Hand hält (beim Rechtshänder) sowohl den Scheibenwischer 6, als auch den Rahmen. Mit der rechten Hand wird die Halteeinrichtung 7 oszillierend über die Scheibenwischerlippe 5 geführt.

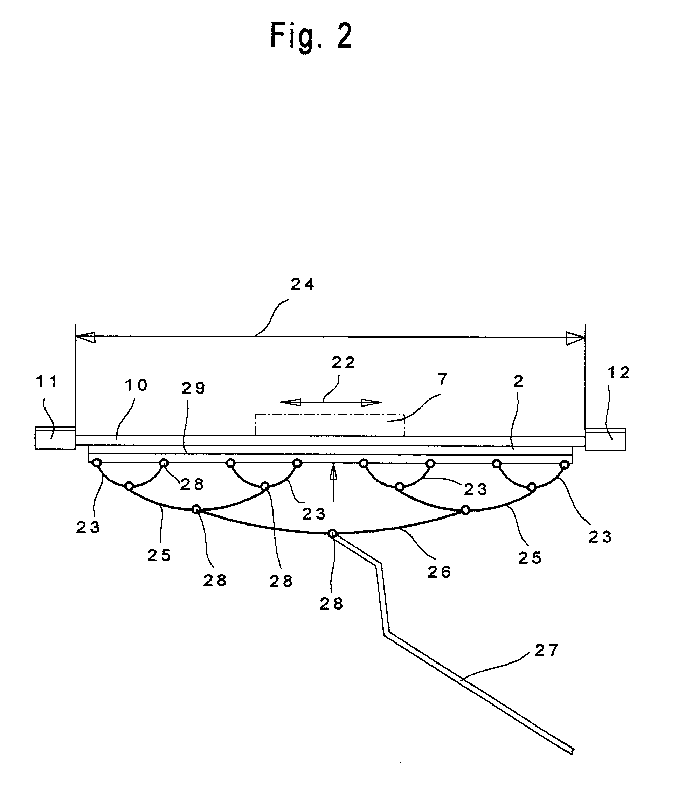

Bei der Figur 2 wird die Nachschleifvorrichtung 1 zusammen mit dem Scheibenwischer 6 im Detail gezeigt. Die Nachschleifvorrichtung 1 bedeckt in diesem Ausführungsbeispiel die Scheibenwischerlippe 5 und den darunter befindlichen Hauptteil des Scheibenwischerblattes 2 über die gesamte Länge. Die Scheibenwischerlippe 5 befindet sich innerhalb der freien Länge 24 der Nachschleifvorrichtung 1. Am Scheibenwischerblatt 2 sind die Kleinwippen 23 in der Art beweglich angeklammert, daß die Klammerstellen gewissermaßen ein Gelenk 28 darstellen. Die Kleinwippen 23 sind über Gelenke 28 mit den Mittelwippen 25 und diese Mittelwippen 25 sind wiederum über Gelenke 28 mit der Hauptwippe 26 verbunden. Diese Hauptwippe 26 ist schließlich ebenfalls über ein Gelenk 28 mit dem Scheibenwischerarm 27 verbunden. In der Praxis gibt es auch noch andere Wippen-Anordnungen, jedoch ist allen gemeinsam, daß sie die punktuelle Krafteinleitung seitens des Scheibenwischerarmes 27, in Verbindung mit der Federeinlage 29, in eine Streckenlast auf der Windschutzscheibe 13 umwandeln sollen. Somit ist die Wippenmechanik geeignet, eine gleichmäßige Anpressung des Scheibenwischerblattes 2 an die Nachschleifvorrichtung 1 zu bewirken. Auf den Leisten 9, 10 liegt die Halteeinrichtung 7 auf, die mittels der Schleifbewegung 22 betätigt wird.

Messungen an Fahrzeugen haben ergeben, daß die Abstände zwischen Gelenken 28 einer Kleinwippe 23, der Abstand zwischen zwei benachbarten Gelenken 28 von benachbarten Kleinwippen 23 und der mit einem Pfeil gekennzeichnete Bereich zwischen den inneren Kleinwippen 23 in etwa gleich sind. Wird die Nachschleifvorrichtung 1 kürzer als dargestellt ausgeführt, so ist der mit einem Pfeil gekennzeichnete Bereich mit einem Finger der Hand zu stützen, die auch den bereits beschriebenen Rahmen hält. Die freie Länge 24 der Nachschleifvorrichtung 1 sollte aber in etwa der dreifachen Länge dem von einer Kleinwippe 23 überspannten Bereich überdecken. Dieses entspricht einer Länge von ca. 300 mm.

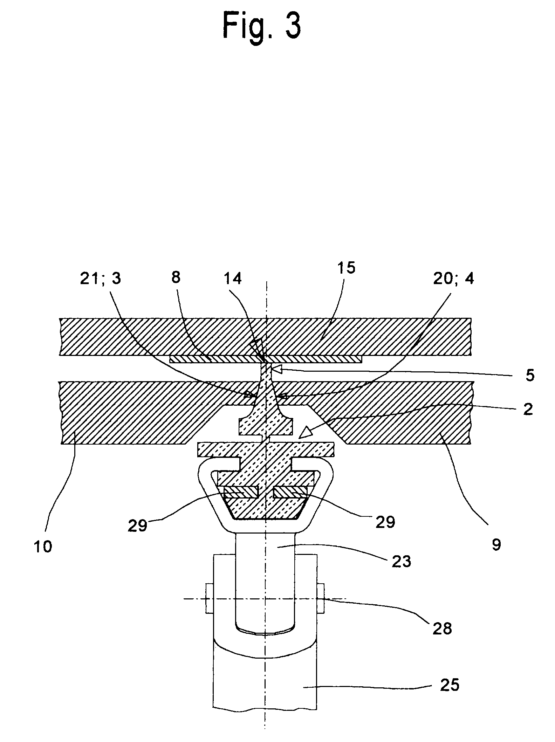

Der mit der Figur 3 offenbarte Querschnitt verdeutlicht weitergehende Einzelheiten. Die Leisten 9 und 10 stützen die Scheibenwischerlippe 5 an ihren Seitenflächen 20, 21 mit im wesentlichen parallelen Stützflächen 3 und 4. Unterhalb einer Blattfeder 15 befindet sich das Schleifmedium 8. Dieses steht im Kontakt mit der Schmalfläche 14 der Scheibenwischerlippe 5. Federeinlagen 29 versteifen das Scheibenwischerblatt 2. Klammern der Kleinwippe 23 greifen in eine Rille des Scheibenwischerblattes ein. Die Kleinwippe 23 ist über das Gelenk 28 mit der Mittelwippe 25 verbunden.

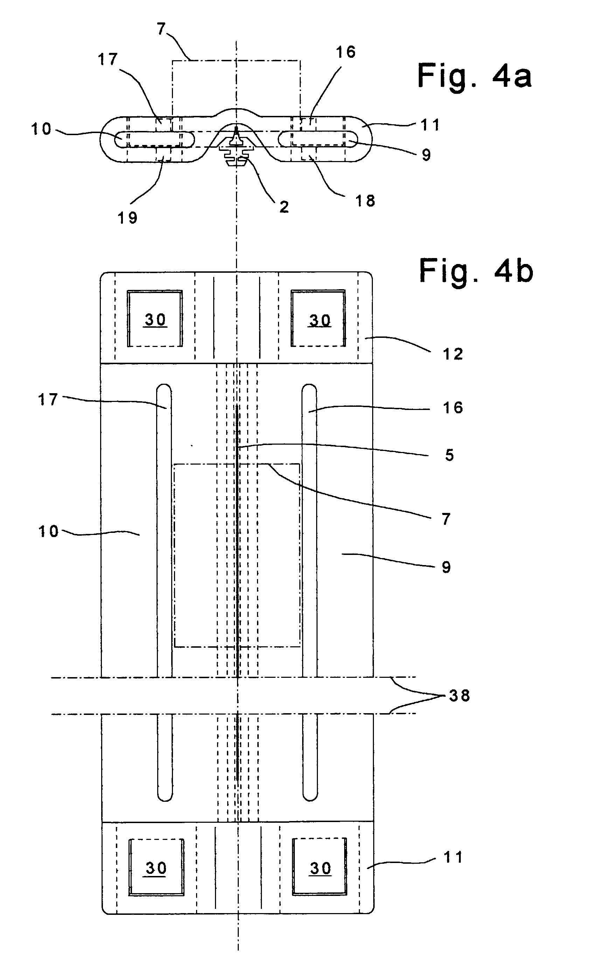

Die Figur 4a ist die Vorderansicht des Rahmens der Nachschleifvorrichtung 1. Die Halteeinrichtung 7 für das Schleifmedium 8 ist nur schematisch angedeutet und bewegt sich zwischen den Führungsstegen 16 und 17. Da die Leisten 9 und 10 evtl. auch spritztechnisch hergestellt werden sollen, ist den Führungsstegen 16, 17 je ein Kompensationssteg 18, 19 zugeordnet, damit es beim Abkühlen der Leisten 9, 10 nicht zu deren Verzug kommt. Die Brückenelemente 11, 12 sind mit einem bogenförmigen Durchlaß für das Scheibenwischerblatt 2 versehen. Dieser bogenförmige Durchlaß ist erforderlich, wenn die freie Länge 24 der Nachschleifvorrichtung 1 kürzer ist als das Scheibenwischerblatt 2, denn anderenfalls würden sonst die Brückenelemente auf dem Scheibenwischerblatt 2 aufsetzen. Die Leisten 9, 10 greifen in Aussparungen der Brückenelemente ein, die deutlicher in der Figur 4b zu sehen sind. An die Brückenelemente 11, 12 sind Rastaugen 30 angeformt, die wiederum in Augen der Leisten 9, 10 einrasten. In der Figur 4b ist die Draufsicht des Rahmens der Nachschleifvorrichtung 1 wiedergegeben. Die wahre Länge wurde verkürzt dargestellt, welches durch die Abbruchlinien 38 angedeutet werden soll.

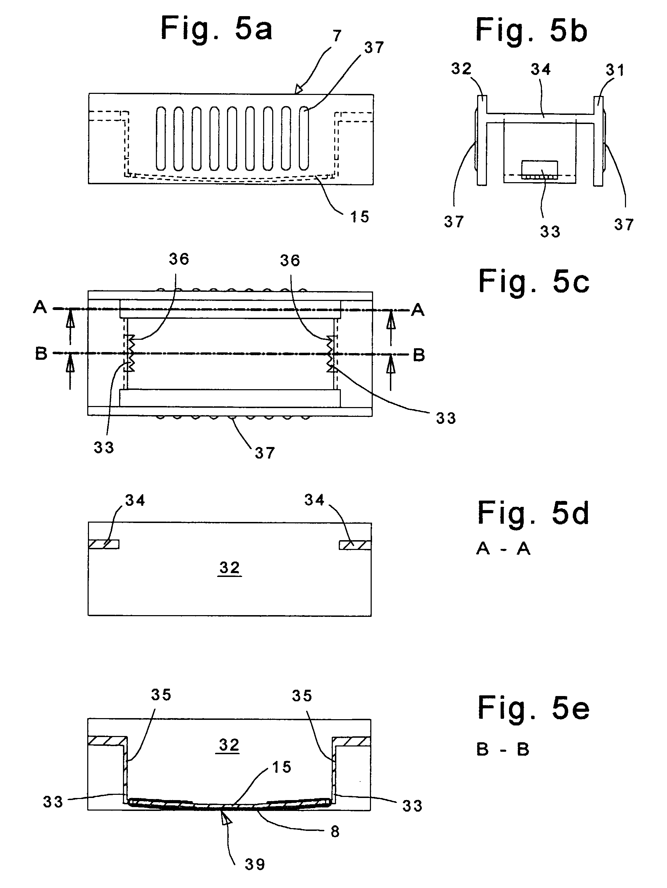

Die Figuren 5a bis 5c zeigen die Seiten-, Vorder- und Draufsicht der Halteeinrichtung 7 der Nachschleifeinrichtung 1. Mit den Figuren 5d und 5e werden Schnitte durch die Halteeinrichtung 7 veranschaulicht. Die Schlittenseitenwände 31, 32 sind über Seitenwanddistanzstege 34 zueinander beabstandet. Über weitere Distanzstege 35 - mit Durchstecköffnungen 33 - wird die radiusförmige Blattfeder 15 gehalten. In den Durchstecköffnungen 33 sind Haltezacken 36 für das Schleifmedium 8 angebracht. Wenn - wie nur in Figur 5e gezeichnet - ein Schleifmedium 8 in der gezeigten Weise um die Blattfeder 15 geschlungen wird (dadurch wird die Schleiffläche 39 bedeckt), behindern die Haltezacken 36 ein durch die Schleifbewegung evtl. hervorgerufenes Verschieben des Schleifmediums (vorzugsweise Sandpapier). Die Durchstecköffnungen 33 sind auch so bemessen, daß ein durch die Sandpapier-Elastizität bedingtes vollständiges Zurückklappen der freien Enden des Sandpapierstreifens, behindert wird. Somit bleibt immer eine Restumschlingung des Sandpapierstreifens um die Haltezacken gewährleistet und das Schleifmedium 8 Sandpapier kann sich nicht wesentlich verschieben.

Während des Nachschleifens kann die Halteeinrichtung 7 sowohl im Bereich der Griffhilfen 37, als auch beispielsweise mit Damen und Zeigefinger im Bereich zwischen den Schlittenseitenwänden 31, 32 angefaßt werden. Im letzteren Fall hat man den Vorteil, daß über die Anpreßkraft der Finger auch noch der Schleifdruck beeinflußt werden kann.

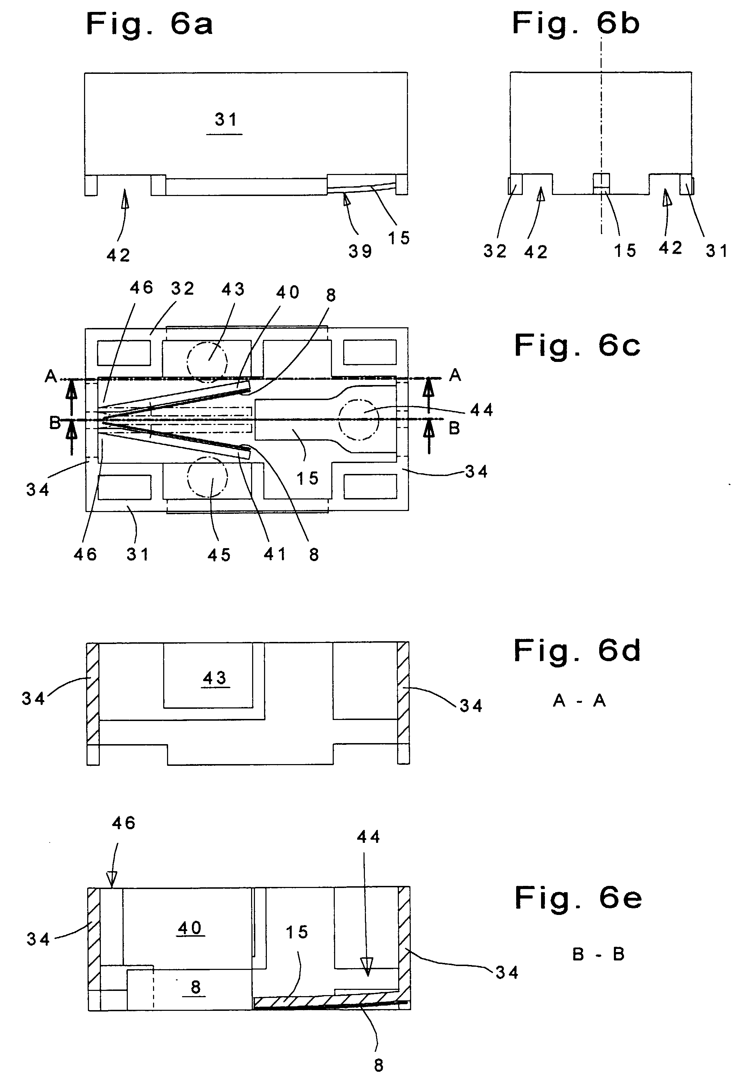

In den Figuren 6a bis 6e wird eine Alternative zu der Halteeinrichtung 7 aus den Figuren 5a bis 5e gezeigt. Auch hier ist die Grundform der Halteeinrichtung 7 wieder kastenförmig, jedoch sind hier insgesamt drei Schleifflächen 39, 40, 41 vorhanden. Die Schleifflächen 40 und 41 bilden ein Paar, welches für das seitliche Schleifen der Scheibenwischerlippe 5 zuständig ist. Die Blattfeder 15 mit ihrer Schleiffläche 39 ist als Kragträger ausgebildet und endet in unmittelbarer Nähe der freien Enden der Schleifflächen 40, 41. Dieses ist von entscheidender Bedeutung und stellt einen großen Vorteil dar: Die Schleiffläche 39 schleift die Schmalfläche der Scheibenwischerlippe 5. Dadurch entsteht Schleifgrat, der in der Figur 6c in der Ebene ausgerichtet ist. Durch das nachfolgende Schleifen - bedingt durch die Schleifbewegung 22 - der Schleifflächen 40 und 41 würde sich ein Grat senkrecht zur Bildebene bilden. Weil aber der Grat durch den engen Abstand zwischen dem Schleifflächenpaar 40, 41 zu der Schleiffläche 39 keine Zeit hat sich räumlich umzuorientieren, wird der Grat immer durch den Wechsel von seitlichen Schleifen zu dem Schleifen auf der Lippenschmalfläche und umgekehrt abgerieben.

Zusätzlich weist diese Halteeinrichtung definierte Fingerpositionen 43, 44, 45 auf, die durch Seiten- und Versteifungswände der Einrichtung gebildet werden. Diese Fingerpositionen erleichtern die Handhabung der Halteeinrichtung und die Feinfühligkeit beim Schleifen.

Damit die Halteeinrichtung 7 an ihren Stirnseiten nicht unnötig beim Gleiten behindert wird, weisen die Seitenwanddistanzstege 34 Öffnungen 42 auf. Zur Erleichterung des Schwenkens der Schleifflächen 40, 41 sind sogenannte Filmscharniere 46 zum linken Seitenwanddistanzsteg 34 angebracht. Die übrigen Bezugszeichen ergeben sich aus der Bezugszeichenliste bzw. aus der vorausgegangenen Beschreibung.

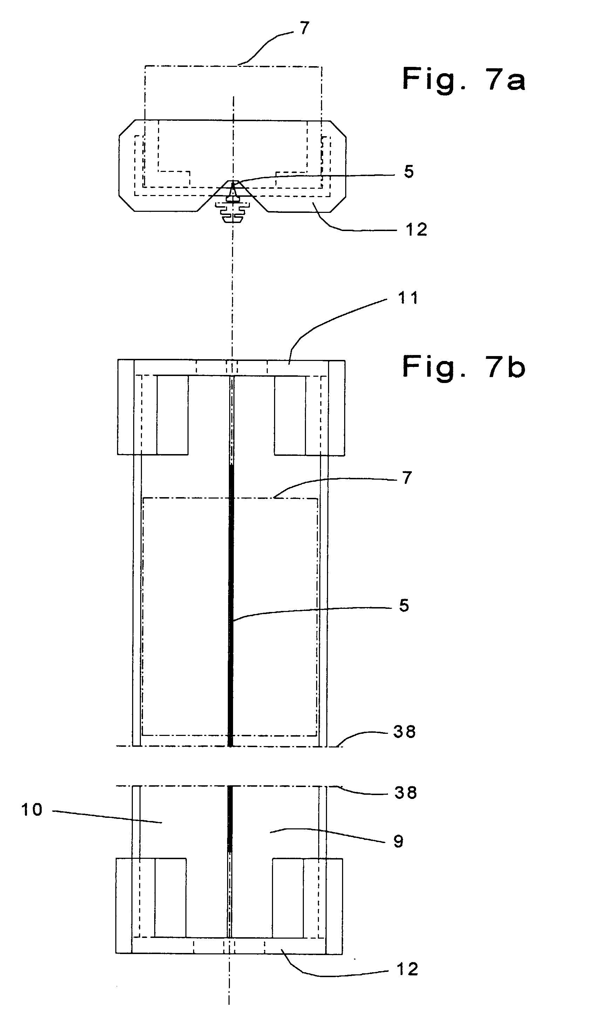

Mit den Figuren 7a und 7b wird eine Ausführungsform der Leisten 9, 10 aus gezogenem Aluminiumprofil gezeigt. Hier werden die Leisten lediglich in die aus Kunststoff bestehenden Brückenelemente 11, 12 eingepreßt. Zur Erzielung eines guten Haltes der Leisten in den Brückenelementen können die Leisten in ihrem Endbereich mit einer genarbten Oberfläche, oder eingeklebt, oder mit Übermaß versehen sein.

### Bezugszeichenliste

- 1: Nachschleifvorrichtung
- 2: Scheibenwischerblatt
- 3: Stützfläche
- 4: Stützfläche
- 5: Scheibenwischerlippe
- 6: Scheibenwischer
- 7: Halteeinrichtung
- 8: Schleifmedium
- 9: Leiste
- 10: Leiste
- 11: Brückenelement
- 12: Brückenelement
- 13: Windschutzscheibe
- 14: Schmalfläche der Scheibenwischerlippe
- 15: Blattfeder
- 16: Führungssteg
- 17: Führungssteg
- 18: Kompensationssteg
- 19: Kompensationssteg
- 20: Seitenfläche der Scheibenwischerlippe
- 21: Seitenfläche der Scheibenwischerlippe
- 22: Schleifbewegung
- 23: Kleinwippe
- 24: freie Länge der Nachschleifvorrichtung
- 25: Mittelwippe
- 26: Hauptwippe
- 27: Scheibenwischerarm
- 28: Gelenk
- 29: Federeinlage
- 30: Rastauge
- 31: Schlittenseitenwand
- 32: Schlittenseitenwand
- 33: Durchstecköffnung
- 34: Seitenwanddistanzstege
- 35: Distanzstege
- 36: Haltezacken
- 37: Griffhilfe
- 38: Abbruchlinie
- 39: Schleiffläche
- 40: Schleiffläche
- 41: Schleiffläche
- 42: Öffnung
- 43: Fingerposition
- 44: Fingerposition
- 45: Fingerposition
- 46: Filmscharnier

## Patentansprüche

1. Manuelle Nachschleifvorrichtung (1) für Scheibenwischerblätter (2) mit den folgenden Merkmalen:
- die Nachschleifvorrichtung (1) weist zwei im wesentlichen parallele Stützflächen (3, 4) auf, die mindestens eine Scheibenwischerlippe (5) eines Scheibenwischers (6) zwischen sich aufnehmen und beidseitig ihrer Längserstreckung berühren,
- die Nachschleifvorrichtung (1) weist eine Halteeinrichtung (7) für ein Schleifmedium (8) auf,
- die Halteeinrichtung (7) wird beim Schleifen relativ zur Längserstreckung der Stützflächen (3, 4) und der Scheibenwischerlippe (5) bewegt,
- wobei die Stützflächen (3, 4) während der Schleifbewegung (22) im wesentlichen ortsfest relativ zu der Scheibenwischerlippe (5) bleiben.

2. Nachschleifvorrichtung (1) nach Anspruch 1, dadurch gekennzeichnet, daß die Stützflächen (3, 4) an Leisten (9, 10) angeformt sind, die über Brückenelemente (11, 12) miteinander gekoppelt und zugleich zueinander beabstandet sind.

3. Nachschleifvorrichtung (1) nach einem der Ansprüche 1 oder 2, dadurch gekennzeichnet, daß die Halteeinrichtung (7) schlittenförmig ausgebildet ist, d.h. daß beim Schleifen die Unterseite der Schlittenseitenwände (31, 32) auf der Oberseite der Leisten (9, 10) gleiten.

4. Nachschleifvorrichtung (1) nach einem der Ansprüche 1 bis 3, dadurch gekennzeichnet, daß an den Leisten (9, 10) Führungsstege (16, 17) zum Führen der Halteeinrichtung (7) angeformt sind.

5. Nachschleifvorrichtung (1) nach einem der Ansprüche 1 bis 4, dadurch gekennzeichnet, daß die Halteeinrichtung (7) eine, der Schmalfläche der Scheibenwischerlippe (5) zugewandte und mit einem Schleifmedium (8) versehene, Schleiffläche (39) aufweist.

6. Nachschleifvorrichtung (1) nach einem der Ansprüche 1 bis 5, dadurch gekennzeichnet, daß die Halteeinrichtung (7) zwei, den Seitenflächen der Scheibenwischerlippe (5) zugewandte und mit Schleifmedium (8) versehene, Schleifflächen (40, 41) aufweist.

7. Nachschleifvorrichtung (1) nach einem der Ansprüche 1 bis 6, dadurch gekennzeichnet, daß mindestens eine der Schleifflächen (39, 40, 41) elastisch federnd ausgebildet ist.

8. Nachschleifvorrichtung (1) nach einem der Ansprüche 1 bis 7, dadurch gekennzeichnet, daß die Halteeinrichtung (7) und die Schleifflächen (39, 40, 41) einstückig ausgebildet sind.

9. Nachschleifvorrichtung (1) nach einem der Ansprüche 1 bis 8, dadurch gekennzeichnet, daß die freie Länge (24) der Nachschleifvorrichtung (1) mindestens dem dreifachen Abstand der Gelenke (28) der kleinsten Kleinwippe (23) entspricht.

10. Nachschleifvorrichtung (1) nach einem der Ansprüche 1 bis 9, dadurch gekennzeichnet, daß das Schleifmedium (8) mit einer den Schleifstaub abweisenden Oberfläche versehen ist.

11. Nachschleifvorrichtung (1) nach einem der Ansprüche 1 bis 10, dadurch gekennzeichnet, daß in Richtung der Schleifbewegung (22) betrachtet, die Schleiffläche (39) unmittelbar nach den Schleifflächen (40, 41), - beziehungsweise bei entgegengesetzter Blickrichtung, in umgekehrter Reihenfolge - angeordnet ist.
